# EUROPEAN PATENT APPLICATION

(11) **EP 2 647 485 A1**
(43) Date of publication of application: **09.10.2013**
(21) Application number: 13162571.7
(22) Date of filing: 05.04.2013
(51) Int. Cl.: B29C 49/64, B29C 49/78, B29K 67/00, B29C 35/08, B29C 49/68

(54) **Device and method for heating a preform in plastic material**

(30) Priority: 06.04.2012 IT PR20120020
(71) Applicant: Gea Procomac S.p.A., 43038 Sala Baganza (PR) (IT)
(72) Inventor: Pagliarini, Paolo, 43123 Parma (IT); Veronesi, Paolo, 41100 Modena (IT)
(74) Representative: Gotra, Stefano

(57) **Abstract**

A device for heating a preform in plastic material intended to become a container such as a bottle, comprising:
- means (2) for generating microwaves;
- an applicator (6) of microwaves comprising a shell (44) which identifies a chamber (3) housing at least one part of the preform, said applicator (6) also comprising an emitter (4) of microwaves intended to emit microwaves into said chamber (3) for heating the preform;
- means (8) for the transmission of microwaves from the generation means (2) to the emitter (4).

The means (2) for the generation of microwaves are means for the generation of microwaves at variable and adjustable frequency in order to optimise the absorption of microwaves by the preform.

## Description

The present invention relates to a device and a method for heating a preform in plastic material intended to become a container. Such container may for example be a bottle.

An apparatus is known for heating a preform through microwaves, described for example in patent EP2208597. The heating is preparatory for the stretch-blowing operations that allow the preform to become a container. Such apparatus comprises:
- a resonance chamber housing the preform;
- a microwave generator, usually a magnetron that emits a relatively large frequency spectrum centred on a permitted band;
- a waveguide of the microwaves that are then conveyed from the generator to the resonance chamber;
- mobile inserts that can be positioned in the resonance chamber or along the waveguide to perform load impedance matching.

The engagement or disengagement of the above-indicated mobile inserts defines a way of performing impedance matching and compensating for the load property variations; this allows impedance matching according to the geometry of the starting preform. Such apparatus is not free from drawbacks connected for example with system complications and the impossibility to quickly adapt the load in the event of sudden variations in properties induced by heating (for example polymeric materials have different absorption of microwaves according to their temperature). A further drawback of the above-described apparatus is connected with the fact that the system complications are translated into a higher number of components, due both to the presence of the mobile inserts and the actuators needed for their activation; consequently, the higher number of components presupposes a higher cost and larger dimensions.

For a given load within a general microwave emitter the maintenance of maximum energy efficiency, i.e. minimization of the reflection coefficient, requires systems to be adopted for impedance matching able to compensate for variations in load properties.

Another solution is described in document W02006/105769, which shows a resonating unit with impedance matching performed through a tri-stub (i.e. a transmission line stub).

In this context, the technical task underpinning the present invention is to provide a device and a method for heating preforms, which obviate the drawbacks of the prior art cited above.

The object of the present invention is to provide a stronger and more efficient device and a more controllable method for heating preforms with optimal energy efficiency.

A further object of the present invention is to provide a device whose production cost is contained.

The technical task set and the objects specified are substantially attained by a device and a method, comprising the technical characteristics as set out in one or more of the accompanying claims.

Further characteristics and advantages of the present invention will more fully emerge from the non-limiting description of a preferred but not exclusive embodiment of a device and a method for heating a preform, as illustrated in the accompanying drawings, in which:
- Figures 1 and 2 illustrate a first embodiment of a device according to the present invention;
- Figures 3 and 4 illustrate a second embodiment of a device according to the present invention;
- Figures 5 and 6 illustrate a third embodiment of a device according to the present invention;
- Figures 7 and 7a illustrate a fourth embodiment of a device according to the present invention;
- Figure 8 illustrates a variation of the device of Figure 7;
- Figure 9 illustrates a fifth embodiment of a device according to the present invention.

In the accompanying figures, reference number 1 indicates a device for heating a preform in plastic material intended to become a container. For example, such a container may be a bottle, but also a test tube or the like. Conveniently the preform is made of PET (polyethylene terephthalate). Such PET may be transparent or coloured, or possibly even multi-coloured. In any case, the preform could also be made of other thermoplastic materials or materials of natural origin, for example PEF, PLA, PHA, etc.

The heating device 1 comprises means 2 for generating microwaves. The use of means 2 for generating microwaves to generate radiation that can heat the preform is advantageous with respect to the use of infrared rays. In fact, microwaves allow greater penetration and greater application efficiency, i.e. a higher percentage of energy transferred from the microwaves to the preform. Considering the high penetration depth of microwaves it is possible to treat extremely wide classes of polymeric and non-polymeric materials (see, for example, the indications above; in particular, the use of microwaves makes the treatment of multi-coloured PET possible, a material whose treatment with infrared radiation would be extremely difficult).

Conveniently, the device 1 comprises a microwave applicator 6 comprising a shell 44 that identifies a housing chamber 3 of at least one part of the preform. The shell 44 can be made of conducting material or dielectric material superficially coated in a conductor. Preferably the housing chamber 3 of the preform is centrally symmetrical. The device 1 comprises an emitter 4 (or introducer) of microwaves into the chamber 3 to heat the preform. In fact, microwaves are introduced into the chamber 3 through an emitter 4, of different specific geometry to obtain a high intensity value of the electric field in correspondence with the positioning area of the preform 7. Such a shell 44 also allows the containment of the microwaves. Conveniently such a shell 44 surrounds the chamber 3.

As will be more fully explained below in the embodiments, exemplified in

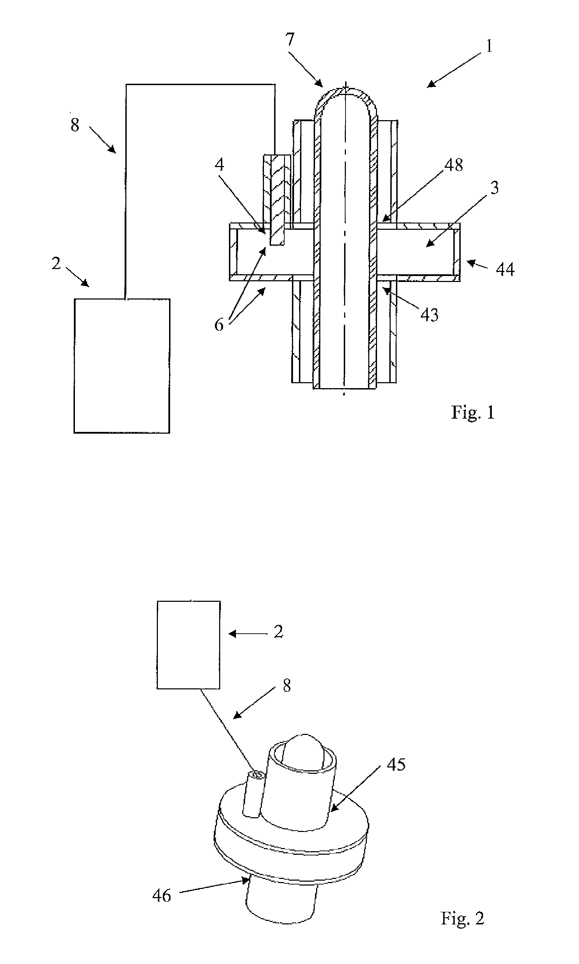

Figures 1-9, said emitter 4 supplies the chamber 3, allowing the load (preform) to be exposed to the action of the microwaves. The emitter 4 can be confined inside the walls of the chamber 3 that define the shell 44 and that advantageously contributes to preventing any microwaves escaping.

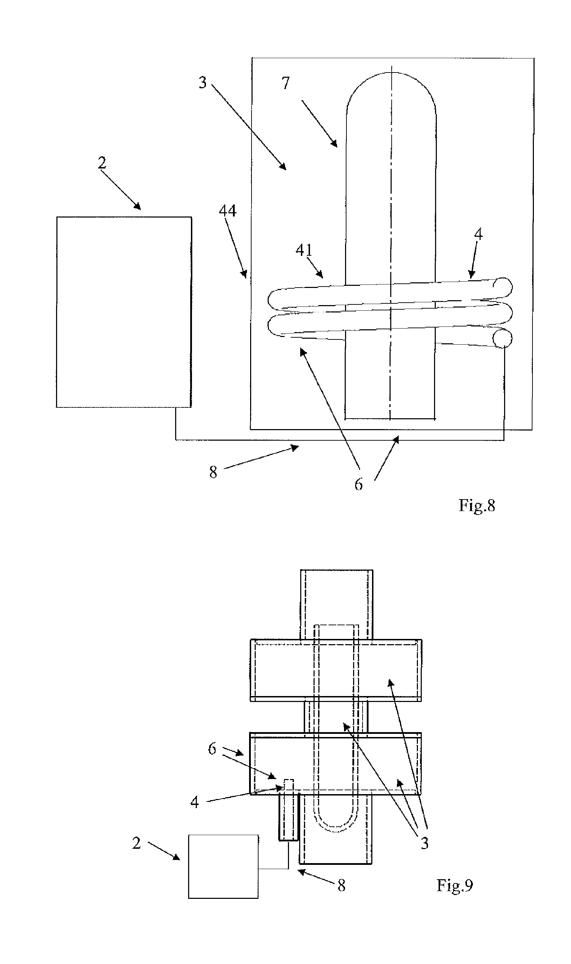

The device 1 further comprises means 8 for the transmission of microwaves from the generation means 2 to the emitter 4. The transmission means 8 may be rigid, semi-rigid or flexible (the choice is dictated by the need or not to shift the applicator 6 -and/or the emitter 4 as for example in Figure 8- along the preform 7 during operation). The transmission means 8 can for example comprise a coaxial cable or a waveguide. In the event of a coaxial cable, as exemplified in Figures 1-4, advantageously a protruding portion of the central conductor, straight or curved, is part of the emitter 4 for the excitation of the chamber 3. In the event of a waveguide, the excitation of the applicator 6 takes place through a coupling iris and a convenient transition in the waveguide, which constitute the emitter 4.

The microwaves generation means 2 are variable and adjustable frequency microwave generation means (within the permitted ISM frequencies) for optimising energy efficiency, in particular for optimising the degree of absorption of the microwaves by the preform. The microwave generation means are also means of generating microwaves at a variable and conveniently adjustable power. In fact, the degree of absorption varies as parameters such as the geometry of the load or the temperature of the load vary.

In this way, impedance matching is obtained through the controlled variation of the frequency emitted by the generation means 2. The impedance matching therefore envisages changing the frequency of the microwaves emitted by the generation means 2 so as to obtain resonance conditions at different frequencies. In practice, a resonance condition is sought to be found by varying the frequency of the microwaves so that the latter is equal or close to the actual frequency of the load (the load comprises the preform and potentially the applicator).

Preferably, the microwave generation means 2 comprise a "solid state generator" or more generally a generator that emits microwaves at a predetermined frequency that can be set by the user within permitted ranges (i.e. the "ISM frequencies" allocated for industrial, scientific and medical uses). In particular the solid state generators in a predetermined operating configuration are able to emit microwaves all having a predetermined frequency value (and not a spectrum of frequencies centred around a nominal value). The solid state generators further allow both the power delivered and the on/off conditions to be varied extremely quickly in order to deliver power only when effectively necessary. In a particular embodiment the microwave generation means 2 generate microwaves having a precise frequency comprised between 2.4 and 2.5 GHz. By way of example, simulations conducted by the Applicant have highlighted that for an increase in temperature of the preform from 20 °C (room temperature) to 105 °C a variation in frequency from 2,400 to 2,4835Ghz is required (in the case of the solution in Figure 1). Conveniently the device 1 comprises gripping means for the preform, for example a gripper. The preform has an elongated development along a first imaginary straight line 71 integral with the preform itself. For example said gripper is suitable to grasp an end of the preform close to the neck of the preform. The device 1 further comprises shifting means of the gripping means of the preform relative to the applicator 6. The descriptions in the present text in relation to the shifting means of the gripping means of the preform relative to the applicator 6 could be repeated for the shift of the gripping means relative to the emitter 4. In particular, the relative shifting means allow a relative shift of the applicator 6 and the gripping means along said first imaginary straight line 71 (as previously specified it is oriented along the elongation direction of the preform. Typically such a relative shift may be a translation or a roto-translation. This detail allows an applicator 6 to be used which develops along the first straight line 71 covering a shorter length than the length of the preform to be subjected to treatment. The relative shift along the first straight line 71 therefore allows the heating to be performed, at subsequent times, of different tracts of the preform and potentially with different intensities.

The potential rotation of the preform allows the heating uniformity to be improved (and allows to compensate for situations wherein the electromagnetic field inside the chamber 3 is not perfectly symmetrical). Reference is made, by way of non-limiting example, to Figures 1-4.

The shell 44 identifies and surrounds the chamber 3. Advantageously such a chamber 3 is centrally symmetrical. This allows a distribution of the electric field according to a central symmetry. Conveniently the microwaves are emitted by a surface of the emitter 4 that contributes to supplying the chamber 3. The shell 44 is a substantially cylindrical body with an axial cavity, said axial cavity being part of the chamber 3. Conveniently the shell 44 is also centrally symmetrical. Conveniently the shell 44 comprises at least one first opening 43 that puts the chamber 3 in communication with the outside and allows the insertion of the preform 7 into the chamber 3 and potentially the longitudinal motion relative to the applicator or of the emitter 4 with respect to the preform.

In a solution not shown the device 1 comprises two or more distinct transmission means 8 (for example coaxial cables) connecting an equal number of distinct emitters 4, to one or more distinct microwave generation means 2. Conveniently the transmission means 8 are connected to the applicator 6 through emitters 4 situated at opposite points with respect to the preform housing chamber 3, (conveniently maintaining the central symmetry). This allows the power of the electromagnetic field to which the load is subject to be increased.

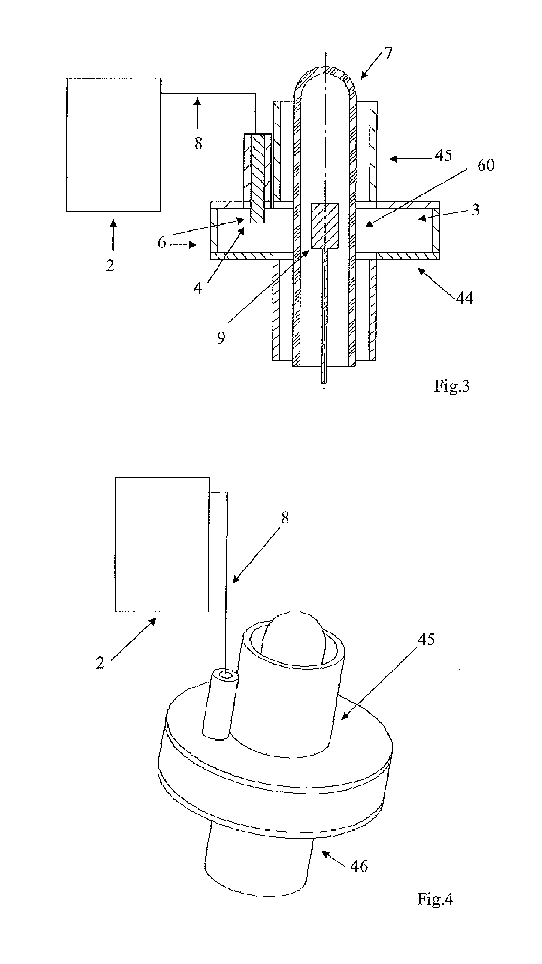

Reference is made by way of example to the embodiments of Figures 3-6; the device 1 comprises a microwave reflector and/or concentration element 9. The element 9, in combination with the applicator 6 (in particular with the shell 44) and at least in one operating configuration defines an annular cavity 60 having one or more of the following characteristics:
- it is interposed between the applicator 6 and the element 9;
- is it intended to house the preform at least partially;
- it is part of the housing chamber 3.

The element 9 in combination with the applicator 6 has the aim of concentrating the microwaves into said annular cavity 60. The intensity of the electromagnetic field is therefore higher in the annular cavity 60 in correspondence with the position of the preform. Conveniently the element 9 comprises a portion that acts as a reflector and that is made of superficially conducting material; the element 9 comprises a portion that acts as a concentrator and that is made of low-loss dielectric material. The dielectric element 9 is used to disturb the distribution of the electromagnetic field in the applicator (in the chamber 3) so as to concentrate the electromagnetic field in the load positioning area. Conveniently the element 9 is held in position through a low-loss dielectric support (PTFE, quartz, etc.).

In the operating configuration indicated above the combination of the applicator 6 and the element 9 allows the concentration of the microwaves in the annular cavity 60, that is, in the area in which the wall of the preform develops in thickness.

Conveniently the device 1 comprises relative shifting means of the preform-element 9 along the first straight line 71. Advantageously, but not necessarily, the shift of the element 9 is integral with the shift of the applicator 6 (and/or the emitter 4). The element 9 in the operating configuration is introduced into a groove 70 defined inside the preform. Preferably, the applicator 6 and the element 9 are coaxial. The element 9 (in particular a lateral wall facing a surface of the applicator delimiting the cavity 60) has a positive, negative or no curvature.

With particular reference to Figures 3-4 it is pointed out that in such case the applicator 6 surrounds the element 9.

Conveniently the applicator 6 (or however the shell 44) is made of conducting material or insulating material covered with a conducting layer. As shown by way of example in Figures 1-4 at two opposite ends of the applicator 6 there are two doors 45, 46 that allow the passage of at least one part of the preform. At least one of these doors 45, 46 is also useful for allowing the measurement of the temperature of the preform. The measurement of such temperature can conveniently be carried out indirectly based on the frequency emitted by the microwave generator 2 in the reflected power minimisation conditions. In fact, there is a biunivocal correspondence between the frequencies able to minimise the power reflected by the applicator 6 and the dielectric properties of the load at a determined temperature, and for a determined geometry of the load itself. The doors 45, 46 are shaped to prevent or minimise microwave leaks; in particular, they could comprise waveguides inserted in "cut-off" conditions or could be equipped with "chokes", which are well-known in the state of the art. Advantageously, the development of the emitter 4 along the first straight line 71 (as previously defined) is determined by the spatial resolution that is desired for the thermal profiling of the preforms. Such resolution can be increased by varying the translation speed in the axial direction of the emitter with respect to the preform.

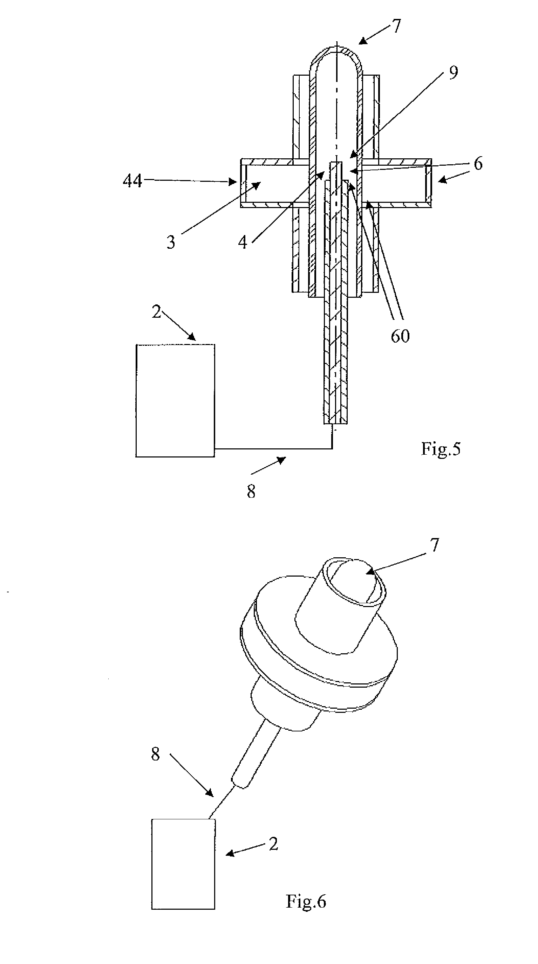

In the solution shown by way of example in Figures 5-6, the element 9 coaxial to the preform 7 could be integrated into the emitter 4. In such case, it is not necessarily used to concentrate the microwaves. In the embodiment of Figures 5-6 the doors 45, 46 that allow the passage of the preform are afforded in two opposite ends of the containment shell 44. In an alternative configuration, the shell 44 may also have larger dimensions than the preform, so that its presence does not excessively disturb the electromagnetic field in proximity to the emitter 4 and maintain the central symmetry of the electromagnetic field in proximity to the insertion area of the preform 7.

As shown by way of example in Figures 5-6, the emitter 4 can be an elongated element and advantageously is intended to be inserted into the preform. Still as shown by way of example in Figures 5-6, the emitter 4 preferably comprises/is constituted by the projecting internal conductor of a coaxial cable connected to the generation means 2. In that case, the emitter 4 is defined in technical jargon as an "antenna". The emitter 4 is also coaxial to the preform.

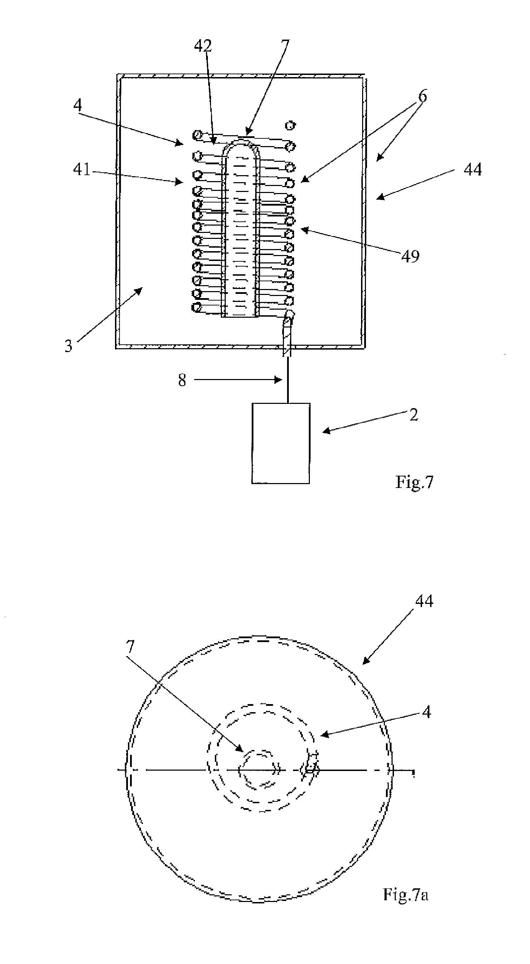

Reference is now made to the embodiment of Figures 7-8.

The emitter 4 is shaped like a helical element 49 comprising one or more turns 41 which surround an area 42 housing the preform. The helical element 49 can have a variable pitch in order to perform differentiated heating in distinct portions of the preform located in the housing area 42 (see Figure 7). This embodiment is especially useful whenever the preform lies completely inside the area 42.

In an alternative solution the helical element 49 could have a substantially constant pitch (see Figure 8). Also in the embodiment of Figures 7-8, the emitter 4 is conventionally defined as an antenna.

In an alternative solution the helical element 49 could also be positioned (at least partially, preferably completely) inside the preform.

With particular reference to Figure 9, the centrally symmetrical chamber 3 has one or more section reducing areas in order to concentrate the electromagnetic field in correspondence with areas of the preform positioned close to such contractions. This section is evaluated orthogonally to the preponderant development direction of the preform in the chamber 3. In particular, the chamber 3 comprises an area with a reduced cross section interposed between two areas with an increased cross section. The excitement of the applicator 6 takes place through one or more emitters 4. The preform can be translated or roto-translated in the event of single section contractions, to reach the desired thermal profiling. In the event of multiple contractions, the preform can stay still or be simply rotated.

This invention also relates to a method for heating a preform 7 in plastic material intended to become a container, such as a bottle. Advantageously this method is implemented through a heating device 1 through microwaves having one or more of the characteristics previously described.

Conveniently, the method comprises the steps of:
- positioning at least one part of a preform 7 into a housing chamber 3;
- generating microwaves at a controlled frequency (typically through a solid state generator as previously described);
- emitting, typically through an emitter 4, the microwaves in the chamber 3 in order to heat the preform 7.

Following this heating the preform 7 is subjected to stretch-blowing to allow the transformation into the final container.

Between the microwave generating step and the microwave emitting step, there is a step of transferring microwaves to the emitter 4 through transmission means 8 (as previously described with reference to the device 1). In a particular embodiment the emitter 4 could also be an introduction inlet for microwaves into the chamber 3, said inlet being an end of the transmission means 8.

The method further comprises the step of varying the microwave generation frequency. This allows the energy efficiency to be optimized as the degree of absorption of the microwaves by the preform 7 varies. The step of varying the frequency of the microwaves is advantageously performed during the heating of a same preform. In fact, the degree of absorption varies for example with the temperature of the preform 7. Therefore during the heating of the preform the microwave generation frequency varies. Conveniently the microwave generation frequency is varied according to a preset profile (to be set by the user).

The method further comprises a step for measuring the temperature of the preform 7; the step of varying the microwave generation frequency is controlled according to the feed-back from the step for measuring the temperature of the preform 7.

Conveniently said step of positioning at least one part of the preform 7 inside the chamber 3 envisages that only a first tract of the part of the preform to be heated is introduced into the chamber 3 at first.

The method comprises a step of shifting an applicator 6 (as defined with reference to the text relative to the device 1) with respect to the preform for submitting in succession various portions of the preform 7 to the microwaves coming from the emitter 4; this step can envisage the shift both of the applicator 6 and the preform 7 or the shift of the applicator 6 while keeping the preform 7 still or vice versa. The step of shifting the applicator 6 with respect to the preform can take place following a predefined law of motion; for example, such a shift can envisage alternate strokes along two opposite directions, each of said two strokes being able to envisage: an acceleration step, one or more constant speed steps and a deceleration step for performing the inversion of the motion. Advantageously the step of shifting the applicator 6 with respect to the preform 7 can be controlled according to the feed-back from the step for measuring the temperature of the preform 7. The description that relates to the step of shifting the applicator 6 with respect to the preform 7 can be repeated for a step of shifting the emitter 4 with respect to the preform 7.

In particular, with reference to Figures 1-4, the method envisages positioning at least one part of the preform 7 in a chamber 3 having a lateral surface integrated into the applicator 6. This envisages introducing the preform 7 through a first opening 43 in the chamber 3. The step of shifting the applicator 6 with respect to the preform 7 can comprise the step of making one part of the preform 7 already subjected to heating come out of the chamber 3, through a second opening 48. Preferably, as previously described, the second opening 48 and the first opening 43 are aligned (they are preferably coaxial) and are afforded in two opposite positions of the chamber 3.

With reference to the examples illustrated in Figures 3-6, the method can envisage reflecting and concentrating the microwaves in correspondence with the thickness of the preform through a concentration and/or reflection element 9 preferably positioned in a groove 70 in the preform.

Advantageously the method further comprises the step of positioning a first element in a groove 70 in the preform 7 and a second annular element around the preform 7. Such second annular element identifies and surrounds the chamber 3 previously described. The first and the second annular element are an applicator 6 and a reflection and/or concentration element 9, which concentrates the microwaves into the thickness of the preform 7 interposed between at least one part of the applicator 6 and the element 9.

In the solution of Figures 3-4, the method comprises positioning the emitter 4 outside the preform and the element 9 inside another groove 70 defined by the preform. In that embodiment the step of shifting the applicator 6 with respect to the preform for submitting in succession various portions of the preform to the microwaves also envisages shifting the element 9 jointly with the applicator 6.

In the solution of Figures 5-6, the method comprises the step of positioning the emitter 4 inside the groove 70 in the preform 7. In that case the method can envisage using such emitter 4 also as a reflection and/or concentration element 9 (the waves emitted by the emitter 4 are reflected by an annular element external to the preform and delimiting the chamber 3 and then return to the emitter 4 which acts as the reflection and/or concentration element).

The method can further comprise the step for measuring the power reflected by the load (this is implemented in a known way by solid state generators).

Conveniently, the step of generating the microwaves can be controlled according to the feed-back from the step for measuring the power reflected by the load.

In the solution of Figures 7-8, the method comprises the step of positioning the emitter 4, shaped like a helical element 49 comprising a plurality of turns, so that such turns surround the preform. The variable number of turns along the axis of the preform allows different heat generation to be obtained inside the preform (thermal profiling). In particular, this effect is obtained without the preform having to be subject to roto-translational motion with respect to the applicator 6.

In the solution of Figure 9, the step of positioning at least one part of a preform in the housing chamber 3 comprises the step of positioning such preform in a chamber 3 having one or more section variations along the development direction of the preform in order to concentrate the electromagnetic field in correspondence with areas of the preform positioned close to such section variations.

The invention as it is conceived enables multiple advantages to be attained.

First of all, it provides greater simplicity since the optimisation of the energy efficiency (impedance matching) is obtained without the positioning in the electromagnetic field of suitable inserts, but by intervening on the frequency of the microwaves (i.e. on electric operating parameters). This provides greater system strength, higher control possibilities, and also enables the components used to be optimised. The optimisation of the components used is also translated into a more compact system hence with lower implementation costs; the greater strength is translated into lower maintenance costs.

The higher control possibilities allow the operation to be varied very quickly, allowing it to be adapted to the effective requirements and hence allowing savings in electricity consumption and therefore in terms of operating costs.

The central symmetry of the electromagnetic field generated within the applicator 6 also makes it possible not to have to resort necessarily to load (preform) rotation systems, however maintaining a uniform temperature along the cross section of the load. In the event of a helical shaped variable pitch emitter, it will not even be necessary to have relative vertical translation between the applicator and the load, with a drastic simplification of the activations and a reduction in the number of components of the preform preheating system.

The invention as conceived is susceptible to numerous modifications and variants, all falling within the scope of the inventive concept characterised thereby. Furthermore all the details can be replaced by other technically equivalent element. In practice, all the materials used, as well as the dimensions, can be any according to requirements.

## Claims

1. A device for heating a preform in plastic material intended to become a container such as a bottle, comprising:
- means (2) for generating microwaves;
- an applicator (6) of microwaves comprising a shell (44) which identifies a chamber (3) housing at least one part of the preform, said applicator (6) also comprising an emitter (4) of microwaves intended to emit microwaves into said chamber (3) for heating the preform;
- means (8) for the transmission of microwaves from the generation means (2) to the emitter (4);
**characterised in that** said means (2) for the generation of microwaves comprise a solid state generator that emits microwaves at a predetermined frequency, which can be modified in order to enable impedance matching, hence optimising the absorption of microwaves by the preform (7).

2. The device according to claim 1, **characterised in that** said shell (44) comprises at least one first opening (43) which puts the chamber (3) in communication with the outside and allows the insertion of the preform into the chamber (3).

3. The device according to claim 1 or 2, **characterised in that** it comprises one reflection and/or concentration element (9) for microwaves which, in combination with the applicator (6) and at least in one operating configuration, defines an annular cavity (60), said annular cavity (60):
- being interposed between the applicator (6) and the element (9);
- being intended to house the preform at least partially;
- being part of the housing chamber (3);
in said operating configuration, the combination of the applicator (6) and the element (9) allowing a concentration of microwaves in the annular cavity (60).

4. The device according to any one of the previous claims, **characterised in that** said emitter (4) is shaped like a helical element (49) comprising one or more turns (41) which surround an area (42) housing the preform or which are intended to remain fully inside the preform to be heated.

5. The device according to claim 4, **characterised in that** said helical element (49) has a variable pitch in order to perform differentiated heating in distinct portions of the preform located in the housing area (42), without the need for relative translational or roto-translational motion between the preform (7) and the applicator (6).

6. The device according to any one of the previous claims, **characterised in that** said solid state generator generates microwaves with a predetermined frequency which can be set between 2.4 and 2.5 GHz.

7. The device according to any one of the previous claims, **characterised in that** said housing chamber (3) of the preform is centrally symmetrical.

8. A method for heating a preform in plastic material (7) intended to become a container such as a bottle, comprising the steps of:
- positioning at least one part of a preform (7) into a housing chamber (3);
- generating microwaves through a solid state generator which emits microwaves at a predetermined frequency;
- emitting, through an emitter (4), the microwaves in the chamber (3) in order to heat the preform (7);
- varying the frequency of the microwaves emitted by the solid state generator in order to match the impedance hence optimising the absorption of the microwaves by the preform (7).

9. The method according to claim 8, **characterised in that** the step of varying the microwave frequency is performed during the heating of the preform itself.

10. The method according to claim 8 or 9, **characterised in that** the step of varying the microwave frequency occurs following a preset profile.

11. The method according to claim 8 or 9 or 10, **characterised in that** it comprises a step for measuring the temperature of the preform (7); the step of varying the microwave generation frequency being controlled at least according to the feed-back from the step for measuring the temperature of the preform (7).

12. The method according to any one of the claims from 8 to 11, **characterised in that** the emitter (4) and/or the chamber (3) is/are shifted with respect to the preform in order to submit in succession various portions of the preform to the microwaves coming from the emitter (4).

13. The method according to any one of the claims from 8 to 12, **characterised in that** it comprises a step for positioning a reflection and/or concentration element (9) into a groove (70) in the preform so as to concentrate the microwaves into the thickness of the preform (7).
